(19) Europäisches Patentamt

European Patent Office

Office européen des brevets

(11) EP 0 826 549 B1

(12) **EUROPÄISCHE PATENTSCHRIFT**

(45) Veröffentlichungstag und Bekanntmachung des Hinweises auf die Patenterteilung:
**21.11.2001 Patentblatt 2001/47**

(51) Int Cl.$^7$: **B60L 3/10**

(21) Anmeldenummer: **97114368.0**

(22) Anmeldetag: **20.08.1997**

(54) **Verfahren und Anordnung zur Bestimmung der Phasenverschiebung zweier korrelierter Signale**

Method and device for determining the phase difference of two correlating signals

Méthode et dispositif pour détermination la différence de phases de deux signaux correlants

(84) Benannte Vertragsstaaten:
**AT CH DE ES FR IT LI**

(30) Priorität: **26.08.1996 DE 19634365**

(43) Veröffentlichungstag der Anmeldung:
**04.03.1998 Patentblatt 1998/10**

(73) Patentinhaber: **DaimlerChrysler AG
70567 Stuttgart (DE)**

(72) Erfinder:
• **Schreiber, Rolf
68199 Mannheim (DE)**
• **Kögel, Rüdiger
76689 Karlsdorf-Neuthard (DE)**

(74) Vertreter: **Luderschmidt, Schüler & Partner GbR Patentanwälte,
Postfach 3929
65029 Wiesbaden (DE)**

(56) Entgegenhaltungen:
**EP-A- 0 195 249        EP-A- 0 621 156**

• **SCHREIBER R ET AL: "REGELUNG ZUR OPTIMALEN KRAFTSCHLUSS-AUSNUTZUNG BEI DREHSTROMLOKOMOTIVEN AUF DER BASIS DER STEIGUNG DER KRAFTSCHLUSSKENNLINIEN OPTIMAL ADHESION CONTROL FOR LOCOMOTIVES WITH THREE-PHASE DRIVES BASED ON GRADIENT CHARACTERISTIC CURVE OF ADHESION COEFFICIENT" ELEKTRISCHE BAHNEN, Bd. 93, Nr. 5, 1.Mai 1995, Seiten 157-163, XP000504758**

**Beschreibung**

Die Erfindung bezieht sich auf ein Verfahren zur Bestimmung der Phasenverschiebung zweier korrelierter Signale nach dem Oberbegriff des Anspruchs 1.

Außerdem bezieht sich die Erfindung auf eine Anordnung zur Durchführung des Verfahrens nach dem Oberbegriff des Anspruchs 2.

Verfahren und Anordnung lassen sich beispielsweise im Rahmen eines Verfahrens zur Adhäsionsregelung elektrischer Triebfahrzeuge verwenden.

Ein solches Verfahren und eine solche Anordnung sind aus Schreiber R. et al: "Regelung zur optimalen Kraftschluß-Ausnutzung bei Drehstromlokomotiven auf der Basis der Steigung der Kraftschlußkennlinien", eb - Elektrische Bahnen 93 (1995) 5, Seiten 157 - 163 bekannt. Dort ist ausgeführt, daß sich zur Messung von Frequenzgängen linearer Systeme besonders Korrelationsverfahren eignen, bei denen ein periodisches Testsignal und das entsprechende Ausgangssignal korreliert werden. Mit Hilfe der orthogonalen Korrelation lassen sich Betrag und Phase des Frequenzgangs für eine bestimmte Frequenz aus zwei Punkten der Kreuzkorrelationsfunktion berechnen. Dieses Verfahren wird hier für eine Berechnung der Phasenverschiebung der Winkelgeschwindigkeit der Motorwelle gegenüber dem Momentensollwert verwendet.

Für die Berechnung der Phasenverschiebung wird dem eigentlichen Momentensollwert ein periodisches Testsignal überlagert - beispielsweise eine Sinusfunktion mit vorgegebener Frequenz und einer Amplitude von zwei bis fünf Prozent des Momentennennwertes. Die resultierende Winkelgeschwindigkeit der Motorwelle beinhaltet daher Frequenzanteile, die aufgrund des eigentlichen Momentensollwertes und der Frequenzkomponente des Testsignals entstehen. Ein auf die Testsignalfrequenz ausgelegtes Bandpaßfilter filtert alle Störkomponenten aus dem Geschwindigkeitssignal heraus, so daß es nur noch die Frequenzkomponente des Testsignals enthält. Dieses Signal wird im ersten Fall mit dem Testsignal selbst, im zweiten Fall mit dem um den Phasenwinkel $\pi/2$ verschobenen Testsignal multipliziert und anschließend der zeitliche Mittelwert der Produkte gebildet. Dadurch erhält man den Imaginär- und Realteil und somit Betrag und Phase des Frequenzgangs bei der vorgegebenen Beobachtungsfrequenz.

In der EP-A2-0621 156 ist ein Verfahren zur Steuerung und Regelung eines elektrischen Antriebes eines Fahrzeuges beschrieben, mit dem eine Adhäsionsregelung unter Vorgabe eines bestimmten Arbeitspunktes auf der jeweiligen Kraftschlußkennlinie , also des Kraftschlußbeiwertes als Funktion der Schlupfgeschwindigkeit, ermöglicht ist. Das Verfahren erlaubt bei Schienenfahrzeugen eine Hochausnutzung des Rad-Schiene-Kontaktes beispielsweise durch Vorgabe eines Arbeitspunktes, der kurz vor dem Erreichen des jeweiligen Kurzschlußmaximums liegt. Der gewählte Arbeitspunkt wird dabei durch die Steigung der Kraftschlußkennlinie am Arbeitspunkt definiert. Auf diese Weise wird bei wechselnden Schienenverhältnissen und damit wechselnden absoluten Kraftschlußmaxima ein Überschreiten des jeweiligen Maximums vermieden, also ein stabiler Fahrbetrieb ohne Schleuder- oder Gleitzustände erreicht. Da für diese Art der Adhäsionsregelung zu jedem Zeitpunkt die Steigung der jeweils gültigen Kraftschlußkennlinie bestimmt werden muß, die Steigung der Kennlinie aber nicht direkt meßbar ist, wird in der EP-A2-0621 156 vorgeschlagen, eine Ersatzgröße heranzuziehen, deren Zusammenhang mit der Steigung bestimmt wird und somit bekannt ist. Als Ersatzgröße wird dabei die Phasenverschiebung zwischen eingangsseitigen und ausgangsseitigen Testsignalen benutzt. Zu diesem Zweck wird einer Eingangsgröße des Antriebssystems, vorzugsweise dem Momentensollwert, ein sinusförmiges Testsignal überlagert. Reaktionen der mechanischen Komponenten des Antriebssystems, also des Fahrmotors, des Getriebes, der Antriebswellen, der Räder und des Rad-Schiene-Kontaktes bewirken eine Änderung des Testsignals, das ausgangsseitig beispielsweise aus einem Winkelgeschwindigkeitsmeßwert gefiltert wird.

Bezüglich eines Verfahrens zur meßtechnischen Bestimmung der Phasenverschiebung zwischen diesen ein- und ausgangsseitigen Testsignalen wird in der EP-A2-0621 156 auf eine weitere Druckschrift, nämlich die EP-B1-0195 249 verwiesen. Dort ist ausgeführt, daß eine Korrelationsrechnung, z. B. eine Polaritätskorrelation (Zweipunkt-Korrelation) in einem Korrelator durchgeführt wird und das Ergebnis in einem Auswerter bezüglich Amplitude und Phase ausgewertet wird. Weitere Einzelheiten zu einem Verfahren zur Bestimmung der Phasenverschiebung sind nicht angegeben.

Der Erfindung liegt die Aufgabe zugrunde, ein konkretes, im Rahmen eines Adhäsionsregelverfahrens anwendbares Verfahren zur Bestimmung der Phasenverschiebung zwischen - bezogen auf einen elektrischen Fahrzeugantrieb - ein- und ausgangsseitig korrelierten Testsignalen mit verbesserter Reglerdynamik anzugeben.

Ferner soll eine Anordnung zur Durchführung des Verfahrens angegeben werden.

Diese Aufgabe wird bei einem Verfahren zur meßtechnischen Bestimmung der Phasenverschiebung zweier korrelierter Signale nach dem Oberbegriff des Anspruchs 1 durch dessen kennzeichnende Merkmale gelöst. Ausgestaltungen sowie eine Anordnung zur Durchführung des Verfahrens sind in weiteren Ansprüchen angegeben.

Das Verfahren beruht auf einer Anwendung des bekannten Verfahrens der orthogonaln Korrelation. Als Meßwerte werden ein Testsignal T, das einer Eingangsgröße eines Fahrzeugantriebs überlagert wird, sowie ein aus einem Geschwindigkeitsmeßsignal gefiltertes ausgangsseitiges Testsignal $T_A$ herangezogen. Es erfolgt eine Adaption und Optimierung des Verfahrens bezüglich Reaktionszeit sowie Realisierungsmöglichkeiten mittels üblicher leittechnischer Mittel. Das bedeutet, daß das ausgangsseitige Testsignal $T_A$ mit einem auf die Testsignalfrequenz ausgelegten Bandfilter gefiltert wird und daß zur verfahrensgemäßen Mittelwertbildung statt üblicher Tiefpäße zur Erhöhung der Reaktionsgeschwindigkeit vorzugsweise Bandsperren verwendet werden.

Eine ausführlichere Beschreibung der Erfindung einschließlich deren Vorteile erfolgt nachstehend anhand von Zeichnungsfiguren und der Darlegung der theoretischen Grundlagen.

Es zeigen:

Fig. 1     eine schematische Darstellung der orthogonalen Korrelation und

Fig. 2     die Struktur einer Anordnung zur Durchführung des Verfahrens zur Bestimmung der Phasenverschiebung und des Betrags zweier korrelierter Signale.

Das Verfahren arbeitet bezüglich der Zielsetzung ähnlich wie ein sogenannter Frequenzgangsmeßplatz. Jedoch weist dieses Verfahren andere Anforderungen und Randbedingungen gegenüber Frequenzgangsmeßplätzen auf:

1. Das Ziel des Verfahrens ist die Bestimmung von Betrag und/oder Phase bei <u>einer</u> fest vorgegebenen Testsignal- oder Beobachtungsfrequenz des zu messenden Systems (Prüflings oder Meßobjekts). Damit weist das Verfahren im Vergleich zum Frequenzgangsmeßplatz eine Gemeinsamkeit, nämlich die Bestimmung des Frequenzgangs, auf. Jedoch arbeitet das letztere mit beliebig vielen Frequenzen, welche durch Wobbler, Synthesizer oder Mitlaufgeneratoren als Quelle realisiert werden und durch eine bestimmte Meßzeit charakterisiert sind. Meßobjekte oder Prüflinge von Frequenzgangsmeßplätzen sind in der Regel Bauteile wie Filter, Verstärker und Mischer, bis hin zu komplexen Systemen mit zahlreichen Bauteilen, Steckverbindern und Kabeln.

2. Das Verfahren bestimmt die zu messenden Größen wie Imaginär-, Realteil, Betrag und/oder Phase eines generell <u>nichtlinearen</u> Systems. Die kontinuierlichen Änderungen der zu bestimmenden Meßgrößen beschreiben das nichtlineare Verhalten des Systems. Frequenzgangsmeßplätze können generell nur bei <u>linearen</u> Systemen eingesetzt werden.

3. Die zu ermittelnden Meßgrößen müssen nach Punkt 2 kontinuierlich erfaßt werden. Demzufolge ist eine Meßzeit zu vermeiden oder zumindest zu minimieren. Dieses bedeutet beispielsweise, daß das Einschwingverhalten des Meßverfahrens, z.B. der einzelnen Filter des Korrelationsverfahrens minimiert werden muß.

4. Die zu ermittelnden Größen werden durch Auswertung einer stark gestörten Meßinformation wie Drehzahl oder Beschleunigung berechnet. Daher muß das Verfahren bezüglich Störungen sehr robust sein.

5. Das Verfahren muß auf leittechnischen Einrichtungen, beispielsweise auf Speicherprogrammierbaren Steuerungen realisierbar sein.

Im folgenden wird eine Meßanordnung auf der Basis eines aus Isermann, R.: Identifikation dynamischer Systeme, Bd. I, Springer Verlag, 1988, bekannten Korrelationsverfahrens beschrieben, das die Phase bei einer festen, vorgegebenen Beobachtungsfrequenz meßtechnisch ermittelt und somit zur Bestimmung der Steigung der Kraftschlußkennlinie verwendet werden kann.

<u>Zum Verfahren der orthogonalen Korrelation:</u>

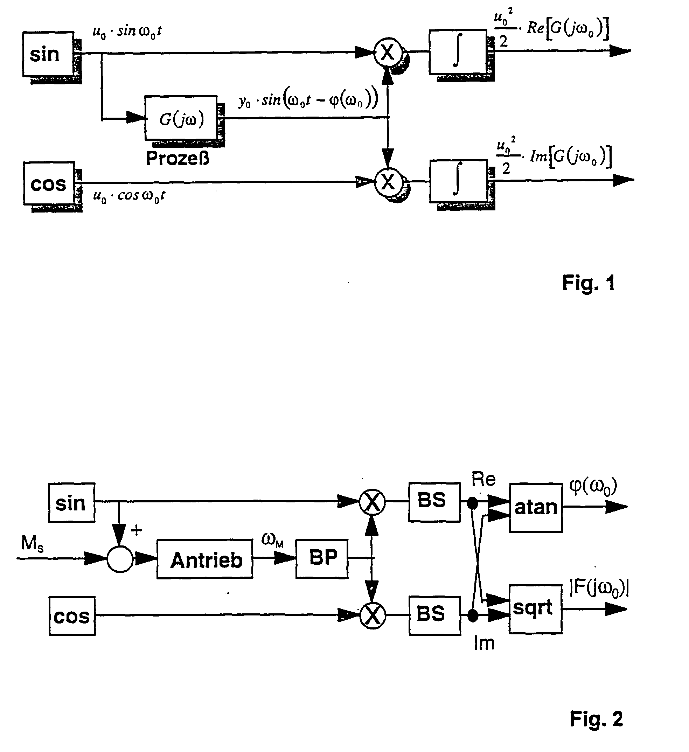

Fig. 1 zeigt eine schematische Darstellung der nachstehend erläuterten orthogonalen Korrelation.

Zur Messung von Frequenzgängen linearer System sind besonders Korrelationsverfahren geeignet, bei denen ein periodisches Testsignal u(t) und das entsprechende Ausgangssignal y(t) korreliert werden. Mit Hilfe der orthogonalen Korrelation lassen sich Frequenzgangwerte, also Betrag und Phase, für eine bestimmte Frequenz aus zwei Punkten der Kreuzkorrelationsfunktion (KKF) berechnen. Dieses Verfahren wird hier für die Berechnung der Phasenverschiebung zwischen dem Momentensollwert und der Winkelgeschwindigkeit der Motorwelle verwendet. Nach einer kurzen Zusammenstellung der theoretischen Grundlagen werden vor allem die Umsetzung des Meßprinzips auf Rad-Schiene-Systeme behandelt.

Theoretische Grundlagen gemäß R. Isermann:

Bei einem linearen System mit der Laplace-Übertragungsfunktion G(s) erhält man als Systemantwort auf ein periodisches Testsignal

$$u(t) = u_o \cdot \sin\omega_o t \qquad (1)$$

mit der Anregungsfrequenz

$$\omega_o = \frac{2\pi}{T_P} \qquad (2)$$

das Ausgangssignal

$$y(t) = u_o \cdot |G(j\omega_o)| \cdot \sin(\omega_o t - \varphi(\omega_o)) \qquad (3)$$

und die zugehörige Kreuzkorrelationsfunktion (KKF)

$$\phi_{uy}(\omega_o) = \lim_{T\to\infty} \frac{1}{T} \int_0^T u(t-\tau) \cdot y(t)dt = \frac{u_o{}^2}{2} \cdot |G(j\omega_o)| \cdot \cos(\omega_o\tau - \varphi(\omega_o))$$

$$(4)$$

Für die Berechnung der Frequenzgangwerte (Betrag und Phase) für eine bestimmte Frequenz ist nicht der vollständige Verlauf der KKF in Abhängigkeit von $\tau$ erforderlich. Real- und Imaginärteil des Frequenzganges lassen sich bei einer sinusförmigen Anregung aus zwei Punkten der KKF berechnen.

$$\phi_{uy}(O) = \frac{u_o{}^2}{2} \cdot Re[G(j\omega_o)] = \frac{u_o}{nT_p} \cdot \int_0^{nT_p} y(t) \cdot \sin\omega_o t\, dt \qquad (5)$$

$$\phi_{uy}\left(\frac{T_p}{4}\right) = \frac{u_o{}^2}{2} \cdot Im[G(j\omega_o)] = \frac{u_o}{nT_p} \cdot \int_0^{nT_p} y(t) \cdot \cos\omega_o t\, dt \qquad (6)$$

Bei einem sinusförmigen Testsignal muß also das Ausgangssignal im ersten Fall mit dem Testsignal, im zweiten Fall mit dem um den Phasenwinkel $\pi/2$ verschobenen Testsignal multipliziert werden und der zeitliche Mittelwert der Produkte gebildet werden. Betrag und Phase des Frequenzganges erhält man schließlich aus den Beziehungen

$$\varphi(\omega_o) = \arctan\left[\frac{Im\{G(j\omega_o)\}}{Re\{G(j\omega_o)\}}\right] \qquad (7)$$

$$|G(j\omega_o)| = \sqrt{Im^2\{G(j\omega_o)\} + Re^2\{G(j\omega_o)\}} \qquad (8)$$

<u>Zur Adaption an Fahrzeuge mit Rad-Schiene- oder Rad-Fahrbahn-Kontakt, die in Fig. 2 dargestellt ist:</u>

Für die Identifikation der Phasenverschiebung nach dem erläuterten Prinzip wird der Eingangsgröße des Prozesses, z.B. dem eigentlichen Momentensollwert Ms des Antriebs ein periodisches Testsignal mit einer Frequenz von z.B. $f_B$=10 Hz und einer Amplitude von ungefähr zwei bis fünf Prozent der maximalen Eingangsgröße, also des Momentensollwerts $M_s$ überlagert.

Die resultierende Winkelgeschwindigkeit $\omega_M$ oder auch die Beschleunigung der Motorwelle, oder der Radachse beinhalten daher Frequenzanteile, die aufgrund des eigentlichen Momentensollwerts und der Frequenzkomponente des Testsignals entstehen. Ein auf die Testsignalfrequenz ausgelegtes Bandpaßfilter **BP**, in der Regel ein Filter höherer Ordnung, filtert alle Störkomponenten aus dem Geschwindigkeitssignal heraus, so daß es nur noch die Frequenzkomponente des Testsignals enthält. Als Mittenfrequenz des Bandpaßfilters wird die Beobachtungsfrequenz, also die Testsignalfrequenz gewählt. Damit ergibt sich keine zusätzliche Phasenverschiebung durch das Filter.

Das gefilterte Signal wird im ersten Fall mit dem Testsignal selbst, im zweiten Fall mit dem um den Phasenwinkel π/2 verschobenen Testsignal multipliziert und anschließend der zeitliche Mittelwert der Produkte gebildet. Dadurch erhält man den Imaginär- und Realteil **Im** bzw. **Re**, d. h. Betrag und Phase des Frequenzgangs bei der vorgegebenen Testsignal- oder Beobachtungsfrequenz.

Zur Berechnung der Phase wird das oben aufgeführte Verfahren der orthogonalen Korrelation adaptiert. Damit berechnet das Verfahren die Phasenverschiebung zwischen dem Momentensollwert $M_s$ und beispielsweise der Win-kelgeschwindigkeit $\omega_M$ der Motorwelle. Die Mittelwertbildung der Produkte aus testsignalanteiliger Winkelgeschwin-digkeit $\omega_{M,BP}$ mit Sinus- und Cosinus-Komponente (vgl. Blöcke **sin** bzw. **cos** in Fig. 2) könnte beispielsweise durch Tiefpaßfilter erfolgen. Damit eine gute Mittelwertbildung erzielt wird, müssen die Tiefpaßfilter die oben erwähnten Produkte sehr gut glätten. Damit ergibt sich in Bezug auf die erwähnte Testsignalfrequenz von $f_B$=10 Hz beispielsweise eine Grenzfrequenz von $f_{TP}$=1 Hz. Diese Tiefpaßfilter, in der Regel Filter höherer Ordnung, weisen jedoch ein Verzögerungsverhalten auf, welches sich auf die Reaktionszeit (Meßzeit) des Meßsignals auswirkt. Die Mittelwertbildung wird um so besser, desto kleiner die Grenzfrequenz der Filter ausgelegt wird. Jedoch steigt mit kleiner werdender Grenzfrequenz die Verzögerung der Tiefpässe und damit wieder die Reaktionszeit des Verfahrens.

Durch trigonometrische Umformung der oben aufgeführten Produkte nach folgenden Gleichungen

$$\sin \alpha \cdot \sin \beta = \frac{1}{2}\cdot[\cos(\alpha - \beta)-\cos(\alpha + \beta)]$$

$$\sin \alpha \cdot \cos\beta = \frac{1}{2}\cdot[\sin(\alpha - \beta) + \sin(\alpha + \beta)] \tag{9}$$

erhält man bei der Testsignalfrequenz $\omega_T$ die Ergebnisse

$$\sin(\omega_T\cdot t-\varphi)\cdot\sin(\omega_T\cdot t) = \frac{1}{2}\cdot[\cos(-\varphi)-\cos(2\cdot\omega_T\cdot t-\varphi)]$$

$$\sin(\omega_T\cdot t-\varphi)\cdot\cos(\omega_T\cdot t)= \frac{1}{2}\cdot[\sin(-\varphi) + \sin(2 \cdot\omega_T\cdot t - \varphi)] \tag{10}$$

Durch die jeweilige Multiplikation erhält man einen Gleichanteil

$$\frac{1}{2} \cos(-\varphi) \text{ bzw. } \tfrac{1}{2}\sin(-\varphi)$$

und eine Frequenzkomponente

$$- \frac{1}{2} \cos(2\omega_T t-\varphi) \text{ bzw. } \frac{1}{2} \sin(2\omega_T t-\varphi)$$

welche sich durch Frequenzverdoppelung der Testsignalfrequenz ergibt. Die Mittelwertbildung kann nun, im Gegensatz zur Anwendung mit Tiefpaßfiltern, durch Herausfiltern der doppelten Testsignalfrequenz mittels einer Bandsperre **BS**, in der Regel ein Filter höherer Ordnung, realisiert werden. Die Sperrfrequenz der Bandsperre wird also auf die doppelte Testsignalfrequenz ausgelegt.

Im Vergleich zum Verzögerungsverhalten der Tiefpässe kann durch die erfindungsgemäß bevorzugte Anwendung der Bandsperre bei ähnlicher Glättungscharakteristik etwa ein um den Faktor 2 schnelleres Meßsignal erzielt werden, welches sich auch wesentlich auf die Reglerdynamik bei der Anwendung in einem geschlossenen Regelkreis auswirkt. Die Berechnung der Phasenverschiebung $\varphi(\omega_0)$ durch den Block **atan** und des Betrags $|G(j\omega_0)|$ durch den

Block **sqrt** erfolgt nach Gleichung 7 bzw. 8.

**Patentansprüche**

1. Verfahren zur Bestimmung der Phasenverschiebung ($\varphi$) zwischen

   - einem eingangsseitigen Testsignal T, das einer Eingangsgröße - vorzugsweise einem Momentensollwert ($M_s$) eines elektrischen Antriebs eines Fahrzeuges überlagert wird, und

   - einem ausgangsseitigen Testsignal $T_A$, das aus einem Winkelgeschwindigkeits-Meßsignal ($\omega_M$)oder einem Winkelbeschleunigungs-Meßsignal gefiltert wird, das am mechanischen Ausgang des Antriebs, insbesondere an einer Motorwelle meßtechnisch erfaßt wird, wobei

     a) die Filterung des Winkelgeschwindigkeits-Meßsignals ($\omega_M$) unter Verwendung eines Bandfilters erfolgt, das auf die Frequenz des Testsignals T als Bandmittenfrequenz ausgelegt wird, und
     b) die Bestimmung der Phasenverschiebung ($\varphi$) unter Anwendung des Verfahrens der orthogonalen Korrelation erfolgt, wobei

       - ein erstes Produkt: $T \cdot T_A$ aus dem eingangsseitigen Testsignal T und dem ausgangsseitigen Testsignal $T_A$ gebildet wird,
       - ein zweites Produkt: $T_{Ph} \cdot T_A$ aus einem um den Phasenwinkel $\pi/_2$ verschobenen Testsignal $T_{Ph}$ und dem ausgangsseitigen Testsignal $T_A$ gebildet wird,
       - jeweils die zeitlichen Mittelwerte der so gebildeten Produkte: $T \cdot T_A$ bzw. $T_{Ph} \cdot T_A$ gebildet werden und
       - die Phasenverschiebung($\varphi$)bestimmt wird als Arcustangens des Quotienten aus den beiden Produkten $T \cdot T_A$ bzw. $T_{Ph} \cdot T_A$,

     **dadurch gekennzeichnet, daß** die Mittelwertbildung der Produkte jeweils durch Filterung mittels einer Bandsperre (BS) erfolgt, deren Sperrfrequenz auf die doppelte Frequenz des Testsignals T ausgelegt ist.

2. Anordnung zur Durchführung des Verfahrens nach Anspruch 1, wobei

   - einem elektrischen Antrieb eines Fahrzeuges ein Momentensollwert ($M_s$) zugeführt ist, dem ein sinusförmiges Testsignal T überlagert ist,
   - am Antriebsausgang die Winkelgeschwindigkeit mittels einer Meßeinrichtung erfaßt ist
   - aus dem so gebildeten Meßsignal ein ausgangsseitiges Testsignal $T_A$ gefiltert ist,
   - zur Filterung des Meßsignals ein Bandfilter angeordnet ist, dessen Bandmittenfrequenz die Frequenz des Testsignals T ist,
   - Mittel zur Multiplikation des ausgangsseitigen Testsignals $T_A$ mit dem sinusförmigen eingangsseitigen Testsignal T bzw. mit dem um den Phasenwinkel $\pi/_2$ phasenverschobenen Testsignal $T_{Ph}$ vorhanden sind,
   - Mittel zur Bestimmung der Phasenverschiebung($\varphi$)als Arcustangens des Quotienten aus den beiden Produkten: $T \cdot T_A$bzw. $T_{Ph} \cdot T_A$ vorhanden sind,

   **dadurch gekennzeichnet, daß** jeweils Bandsperren (BS) zur Filterung der so gebildeten Produkte vorhanden sind, deren Sperrfrequenz auf die doppelte Frequenz des Testsignals T ausgelegt ist.

**Claims**

1. A method for determining the phase shift ($\varphi$) between

   - an input test signal *T* superposed to an input quantity - preferably to a momentum setpoint ($M_S$) - of an electric drive assembly of a vehicle, and
   - an output test signal $T_A$ filtered from an angular velocity measuring signal ($\omega_M$) or from an angular acceleration measuring signal which is detected metrologically at the mechanical output of the drive assembly, in paticular at a motor shaft thereof, wherein

     a) filtering of the angular velocity measuring signal ($\omega_M$) is executed by using a bandpass filter adjusted to the frequency of the test signal *T* as the midband frequency, and
b) determining the phase shift ($\varphi$) is executed by applying the orthogonal correlation method, wherein

- a first product: $T \cdot T_A$ is formed from the input test signal *T* and the output test signal $T_A$,
- a second product: $T_{Ph} \cdot T_A$ is formed from a test signal $T_{Ph}$ shifted by the phase angle $^{\pi}/_2$ and the output test signal $T_A$,
- the temporal mean values are formed for each of the thus formed products: $T \cdot T_A$ and $T_{Ph} \cdot T_A$, respectively, and
- the phase shift ($\varphi$) is determined as the arc-tangent of the ratio of the two products $T \cdot T_A$ and $T_{Ph} \cdot T_A$, respectively,

**<u>characterized in that</u>**
formation of the mean value of each of the products is executed by filtering with the aid of a band stop filter (BS), the stop frequency thereof being adjusted to twice the frequency of the test signal *T*.

2. An installation for executing the method of claim 1, wherein

- a momentum setpoint ($M_S$) is supplied to the electric drive assembly of a vehicle, a sinusoid test signal T being superposed to said momentum setpoint,
- the angular velocity is determined at the output of the drive assembly by means of a measuring device,
- an output test signal is filtered from the thus formed measuring signal,
- a bandpass filter is arranged for filtering the measuring signal, the midband frequency thereof being the frequency of the test signal T,
- means are provided for multiplicating the output test signal $T_o$ with the sinusoid input test signal *T* or with the test signal $T_{Ph}$ shifted by the phase angle $^{\pi}/_2$,
- means are provided to determine the phase shift ($\varphi$) as the arc-tangent of the ratio of the two products $T \cdot T_A$ and $T_{Ph} \cdot T_A$, respectively,

**<u>characterized in that</u>** band stop filters (BS) are provided for filtering each of the thus formed products, the stop frequency thereof being adjusted to twice the frequency of the test signal *T*.

**Revendications**

1. Procédé pour déterminer le déphasage ($\varphi$) entre un signal test T côté entrée, qui est superposé à une grandeur d'entrée, de préférence une valeur théorique de couple ($M_s$) d'un entraînement électrique d'un véhicule, et un signal test $T_A$ côté sortie, qui est filtré à partir d'un signal de mesure de vitesse d'angle ($\omega_M$) ou d'un signal de mesure d'accélération angulaire, qui est enregistré sur la sortie mécanique de l'entraînement, en particulier sur un arbre moteur, par des appareils de mesure,

a) le filtrage du signal de mesure de vitesse angulaire ($\omega_M$) s'effectue en utilisant un filtre de bande, qui est conçu pour la fréquence du signal test T comme fréquence moyenne de bande, et
b) le calcul du déphasage ($\varphi$) s'effectue en appliquant le procédé de la corrélation orthogonale,

- un premier produit : $T \cdot T_A$ est constitué du signal test T côté entrée et du signal test $T_A$ côté sortie,
- un deuxième produit : $T_{ph} \cdot T_A$ est constitué d'un signal test $T_{ph}$ décalé du nombre de phases $\pi/2$ et du signal test $T_A$ côté sortie,
- les valeurs moyennes dans le temps des produits ainsi formés sont calculées :

$$T \cdot T_A \text{ et } T_{ph} \cdot T_A,$$

- le déphasage ($\varphi$) est calculé comme arc tangente du quotient à partir des deux produits $T \cdot T_A$ et $T_{ph} \cdot T_A$,

**caractérisé en ce que** le calcul de la moyenne des produits s'effectue respectivement par filtrage au moyen d'un filtre coupe-bande (BS), dont la fréquence de coupure est réglée pour le double de la fréquence du signal test T.

2. Dispositif pour l'application du procédé selon la revendication 1, une valeur théorique de couple ($M_s$) étant appli-

quée à un entraînement électrique d'un véhicule, valeur à laquelle est superposé un signal test T sinusoïdal.

- la vitesse angulaire est enregistrée à la sortie de l'entraînement au moyen d'un appareil de mesure
- un signal test $T_A$ côté sortie est filtré à partir du signal de mesure ainsi formé,
- un filtre à bande, dont la fréquence moyenne de bande est la fréquence du signal test T, est disposé pour le filtrage du signal de mesure
- on présente des moyens pour la multiplication du signal test $T_A$, côté sortie, par le signal test T, côté entrée, de forme sinusoïdale ou avec le signal test $T_{ph}$ décalé de l'angle de phase $\pi/2$,
- on dispose de moyens pour le calcul du déphasage ($\varphi$) comme arc tangente du quotient des deux produits $T \cdot T_A$ et ZW $T_{ph} \cdot T_A$,

**caractérisé en ce qu'**il comporte respectivement des filtres coupe-bande (BS) pour le filtrage des produits ainsi formés, dont la fréquence de coupure est réglée pour le double de la fréquence du signal test T.

**Fig. 1**

**Fig. 2**